# EUROPÄISCHE PATENTANMELDUNG

(11) **EP 2 000 978 A2**
(43) Veröffentlichungstag der Anmeldung: **10.12.2008**
(21) Anmeldenummer: 08405151.5
(22) Anmeldetag: 04.06.2008
(51) Int. Cl.: G06T 7/00

(54) **Verfahren zum Vermessen einer Schablone**

(30) Priorität: 05.06.2007 CH 8872007
(71) Anmelder: heko Tech GmbH, 8494 Bauma (CH)
(72) Erfinder: Heimgartner, Roland, 8498 Bauma (CH)
(74) Vertreter: Frei Patent Attorneys

(57) **Zusammenfassung**

In einem Verfahren zum Vermessen einer Schablone (5) wird eine computerlesbare Darstellung der Umrisse der Schablone (5) mit einem Programm erzeugt, welches den gesamten Prozess, von der Bildaufnahme durch eine Kamera (3) bis zur Ausgabe der computerlesbaren Darstellung für eine Bearbeitungsmaschine abdeckt. Das Programm wird in einer Bilderfassungsvorrichtung (1, 2a, 2b, 2c, 3, 4) ausgeführt, welche eine Messfläche (4) und eine Kamera (3), welche durch das Programm ansteuerbar ist, aufweist. Das Programm korrigiert automatisch Abbildungsfehler der Optik der Kamera (3), und erzeugt eine Segmentierung der Umrisse der Schablone (5). Die Segmentierung wird in einer computerlesbaren Darstellung für eine Bearbeitungsmaschine bereitgestellt. Dabei ist lediglich eine Modifikation der Segmentierung durch den Benutzer notwendig, im Gegensatz zu einem freien Nachzeichnen der Umrisse der Schablone (5). Die so erzeugte Darstellung der Umrisse der Schablone (5) beinhaltet auch die richtigen Grössen der Segmente, die in ein maschinenlesbares Format exportiert werden können, vorzugsweise in das Format DXF (AutoCad Drawing eXchange Format).

## Beschreibung

Die Erfindung bezieht sich auf das Gebiet der messtechnischen Erfassung von Schablonen, so dass eine numerisch gesteuerte Bearbeitungsmaschine zur Herstellung einer Platte entsprechend der Schablonenform ansteuerbar ist. Die Erfindung bezieht sich insbesondere auf ein Verfahren, eine Messeinrichtung und ein Computerprogramm zum Vermessen einer Schablone und zum Erzeugen einer computerlesbaren Darstellung der Umrisse der Schablone gemäss dem Oberbegriff der entsprechenden unabhängigen Patentansprüche.

### STAND DER TECHNIK

Bei der Herstellung von Steinplatten für beispielsweise den Küchenbau ist es üblich, Steinplatten individuell entsprechend den Massen einer Einbauküche anzufertigen. Dafür werden die genauen Masse der gewünschten Platte durch Herstellen einer Schablone erfasst. In einem CAD (Computer Aided Design)-Programm werden die Umrisse der Schablone manuell nachgezeichnet. Eine computerlesbare Beschreibung des so erfassten Umrisses wird durch das CAD-Programm in einem Dateiformat, beispielsweise im Standardformat DXF (AutoCad Drawing eXchange Format), in einer Datei gespeichert. Diese Datei wird durch ein Steuerprogramm einer numerisch gesteuerten Bearbeitungsmaschine eingelesen und gegebenenfalls zusätzlich um Werkzeugparameter ergänzt. Darauf basierend sägt oder fräst die Bearbeitungsmaschine eine Steinplatte in der gewünschten Form.

Dieses Vorgehen bedingt den Einsatz eines kostspieligen und kompliziert zu bedienenden CAD-Programmes. Durch Vermessen der Schablone mit einem Massband und durch manuelles Nachzeichnen im CAD-Programm entstehen Fehler, und der ganze Erfassungsprozess dauert relativ lange.

### DARSTELLUNG DER ERFINDUNG

Es ist deshalb Aufgabe der Erfindung, ein Verfahren, eine Messeinrichtung und ein Computerprogramm zum Vermessen einer Schablone und zum Erzeugen einer computerlesbaren Darstellung der Umrisse der Schablone der eingangs genannten Art zu schaffen, welche die oben genannten Nachteile behebt.

Diese Aufgabe löst ein Verfahren zum Vermessen einer Schablone und zum Erzeugen einer computerlesbaren Darstellung der Umrisse der Schablone mit den Merkmalen des Patentanspruches 1.

Es wird also die computerlesbare Darstellung der Umrisse der Schablone mit einem Programm erzeugt, welches den gesamten Prozess, von der Bildaufnahme durch eine Kamera bis zur Ausgabe der computerlesbaren Darstellung für eine Bearbeitungsmaschine abdeckt. Das Programm wird in einer Bilderfassungsvorrichtung mit einer Messfläche und einer Kamera, welche durch das Programm ansteuerbar ist, und wobei das Programm Abbildungsfehler der Optik der Kamera automatisch korrigiert, ausgeführt. Es wird damit automatisch eine Segmentierung der Umrisse einer Schablone erzeugt, welche in einer computerlesbaren Darstellung für eine Bearbeitungsmaschine bereitgestellt wird. Dabei ist lediglich eine Modifikation der Segmentierung durch den Benutzer notwendig, im Gegensatz zu einem freien Nachzeichnen der Umrisse der Schablone. Die so erzeugte Darstellung der Umrisse der Schablone beinhaltet also auch die richtigen Grössen der Segmente, die in ein maschinenlesbares Format exportiert werden können, vorzugsweise in das Format DXF (AutoCad Drawing eXchange Format). Die exportierte Datei kann abgelegt, in einem CAD-Programm weiterbearbeitet oder über eine Kommunikationsschnittstelle an eine Bearbeitungsmaschine übertragen werden.

Durch den Automatismus und die Einschränkung der Möglichkeiten auf die einzig logischen Schritte ist eine effiziente und äusserst einfache Bedienung möglich, durch die Zeit eingespart und Fehler vermieden werden können. Es wird somit auch möglich, auf die Verwendung eines CAD-Programmes zu verzichten.

In einer bevorzugten Ausführungsform des Erfindungsgegenstandes sind die Segmente von einem der Typen "Gerade", "Kreisbogen" oder "Spline", und schliessen Segmente jeweils an Übergangspunkten aneinander an. Weitere bevorzugte Typen können "Kreis" oder "Ellipse" oder andere elementare geometrische Formen sein.

Die Modifikation der Segmentierung des Umrisses umfasst mindestens eine der folgenden Gruppe von Modifikationsarten:
- Umwandeln des Typs eines Segmentes;
- Verschieben eines Übergangspunktes zwischen zwei Segmenten;
- Zusammenfassen von mehreren Segmenten zu einem Segment; und
- Aufteilen eines Segments in zwei oder mehr Segmente.

Dies bedeutet also, dass Übergangspunkte vorzugsweise nur automatisch eingefügt und dabei positioniert werden, und durch den Benutzer vorzugsweise nur verschoben oder gelöscht werden können. Freie Zeichenfunktionen oder Freihandfunktionen, beispielsweise zum Nachzeichnen eines Umrisses, insbesondere einer von Hand vermessenen Schablone, stehen dem Benutzer vorzugsweise nicht zur Verfügung. Damit sind keine Berechnungen und entsprechenden mathematischen Kenntnisse des Benutzers erforderlich, und es wird die Benutzerinteraktion vereinfacht und beschleunigt.

In einer bevorzugten Ausführungsform der Erfindung weist die Modifikation der Segmentierung des Umrisses die folgenden Schritte auf:
- Erfassen einer Benutzereingabe zum Auswählen eines oder mehrerer Segmente.
- Erfassen einer Benutzereingabe zur Spezifikation einer geometrischen Eigenschaft des oder der ausgewählten Segmente. Eine solche Eigenschaft ist beispielsweise die Länge eines geraden Segmentes, ein Winkel zwischen zwei geraden Segmenten, die Parallelität zweier geraden Segmente, ein knickfreier Übergang zwischen zwei Segmenten, etc.
- Automatisches Anpassen des oder der ausgewählten Segmente an die eingegebene Eigenschaft, und gegebenenfalls auch Anpassen von angrenzenden Segmenten. Vorzugsweise sind - je nach Art der Modifikation - Randbedingungen wählbar, unter denen die Anpassung geschehen muss.
Damit ist es möglich, a priori-Wissen über die Dimensionen und Winkel der zu erzeugenden Steinplatte einzubringen und in konsistenter Weise, ohne tiefgreifende mathematische Kenntnisse und mit minimalem Aufwand in die rechnerische Modellierung der Schablone zu integrieren. Vorteilhaft ist auch die Variante zum Erzwingen eines knickfreien oder stetigen Überganges zwischen Segmenten, das heisst, dass die erste Ableitung zweier Segmente am gemeinsamen Schnittpunkt den gleichen Wert hat. Dies kommt der Ansteuerung der Bearbeitungsmaschinen entgegen.

Konkrete, beispielhafte Sequenzen zur Modifikation sind die Folgenden (aus der Sicht des Benutzers gesehen; eine Auswahl oder eine Eingabe des Benutzers ist also als Erfassen entsprechender Angaben durch das computerbasierte Verfahren zu verstehen):
- a) Auswählen eines Winkels (bei einem Übergangspunkt) zwischen zwei Geraden. b) Vorgabe eines Wertes für den Winkel. c) Auswahl einer Randbedingung zur Angabe, welche der Geraden verschoben werden soll. Die Auswahl kann durch den Benutzer geschehen, es kann aber beispielsweise auch automatisch vorgeschlagen oder vorgegeben werden, dass die kürzere Gerade verschoben werden soll, oder die zuletzt modifizierte Gerade nicht verschoben werden darf.
- a) Auswählen einer Geraden. b) Vorgabe eines Längenwertes für die Gerade, beispielsweise entsprechend der realen, an der Schablone gemessenen Länge der Geraden in Millimetern. b) Auswahl einer Randbedingung zur Angabe, welcher der Endpunkte der Geraden verschoben werden soll, und ob die Gerade ihre Neigung ändern darf oder nicht.
- a) Auswählen eines Kreisbogens und eines oder zweier an diesen Kreisbogen anschliessenden geraden Segmente. b) Auswahl einer Funktion, welche erzwingt, dass die Geraden tangential zum Kreisbogen sind. c) Dabei Angabe von Randbedingungen, ob beispielsweise der Durchmesser des Kreisbogens und/oder sein Mittelpunkt und/oder die Neigung der Geraden geändert werden darf.
- a) Auswählen zweier Geraden. b) Auswahl einer Funktion, welche erzwingt, dass die beiden Geraden parallel sind. c) Dabei Angabe von Randbedingungen, beispielsweise welche der Geraden ihre Neigung beibehält.
- a) Auswählen mehrerer Kreisbögen. b) Auswahl einer Funktion, welche erzwingt, dass alle Kreisbögen denselben Radius aufweisen. c) Dabei Angabe von Randbedingungen, beispielsweise welcher Radius massgebend sein soll, oder ob ein Durchschnittsradius gewählt werden soll, oder der Radius via Benutzereingabe festgelegt wird.
- a) Auswählen eines oder mehrerer Segmente. b) Auswahl einer Funktion, welche die Segmente um ein bestimmtes Mass nach aussen verschiebt (Offset). c) Dabei Angabe, wie weit die Verschiebung sein soll, und wie angrenzende Segmente angepasst werden sollen, beispielsweise durch Parallelverschiebung oder durch Änderung von Kreisradien. Dadurch können vorstehende Ränder, beispielsweise bei einer Platte in einer Küchenkombination, auf einfache Weise erzeugt werden.
- a) Erfassen von Benutzereingaben zur Markierung von zwei Punkten im Bild der Schablone; b) Erfassen einer Benutzereingabe zur Spezifikation eines gemessenen Abstandes zwischen den beiden Punkten der Schablone; c) Skalieren der Segmentierung des Umrisses nach Massgabe dieses Abstandes. Auch in dieser Wiese kann a priori-Wissen eingebracht werden, hier aber zur Feinkorrektur der Skalierung des ganzen Umrisses.

In einer weiteren bevorzugten Ausführungsform des Erfindungsgegenstandes wird eine Dicke der Schablone automatisch bei der Vermassung (also bei der Zuordnung von Längen und Winkeln) der Segmente berücksichtigt, indem die Dicke erfasst wird - durch eine automatische Distanzmessung oder durch eine Benutzereingabe - und die tatsächliche Lage von abgebildeten, d.h. durch die Kamera wahrgenommenen, Umrisspunkten aufgrund ihrer Dicke über der Messfläche korrigiert wird.

Die beschriebenen Schritte zur Umrisserkennung und -verfeinerung gelten für Aussenkonturen wie auch für Innenkonturen, also auch für Ausschnitte respektive Löcher in den Schablonen. Zur Bearbeitung von erfassten Innenkonturen sind vorzugsweise weitere Funktionen realisiert, beispielsweise ein Befehl "erfasse Innenkontur", welcher die Suche nach Randpunkten respektive Objekten innerhalb der Schablone und deren Segmentierung auslöst, oder eine Funktion zum Verschieben oder Verdrehen einer Innenkontur als ganzer.

In weiteren bevorzugten Ausführungsformen der Erfindung werden ganze Innenkonturen, oder auch Abschnitte, d.h. Segmentfolgen von Innen- oder Aussenkonturen, aus einer Bibliothek von Standardkonturen ausgewählt, abgerufen und anstelle einer automatisch segmentierten Kontur eingesetzt. Damit ist es möglich, bekannte normierte Formen einzusetzen, ohne sie genau ausmessen zu müssen. Beispielsweise können bekannte Formen verschiedener Typen von Waschbecken, die in eine Platte eingelassen werden können, als Innenkonturen gespeichert und abgerufen werden.

Die Messeinrichtung zum Vermessen einer Schablone und zum Erzeugen einer computerlesbaren Darstellung der Umrisse der Schablone weist eine Messfläche, eine Kamera sowie eine Datenverarbeitungseinheit mit Ein/Ausgabegeräten und einer Schnittstelle zum Einlesen von digitalisierten Bildern der Kamera auf, sowie Speichermittel mit darin gespeicherten Computerprogrammcodemitteln, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zum Vermessen einer Schablone und zum Erzeugen einer computerlesbaren Darstellung der Umrisse der Schablone ist in einen internen Speicher einer digitalen Datenverarbeitungseinheit ladbar und weist Computerprogrammcodemittel auf, welche, wenn sie in einer digitalen Datenverarbeitungseinheit der Messeinrichtung ausgeführt werden, diese zur Ausführung des erfindungsgemässen Verfahrens bringen. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
Figur 1 den Aufbau einer Messeinrichtung;
Figur 2 eine Anordnung von Messflächen zum Ausrichten der Kamera;
Figur 3 eine Korrektur von Messungen entsprechend der Schablonendicke.
Figur 4 und 5 Bilder einer Schablone mit automatisch detektiertem Umriss;
Figur 6 bis 9 eine Modifikation eines runden Konturabschnittes;
Figur 10 und 11 eine Verschiebung eines Übergangspunktes;
Figur 12 und13 ein Erzwingen eines rechten Winkels;
Figur 14 eine fertig angepasste Umrisslinie;
Figur 15 eine exportierte Umrisslinie in einem CAD-Programm; und
Figur 16 bis 19 weitere Modifikationsmöglichkeiten von Segmenten.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

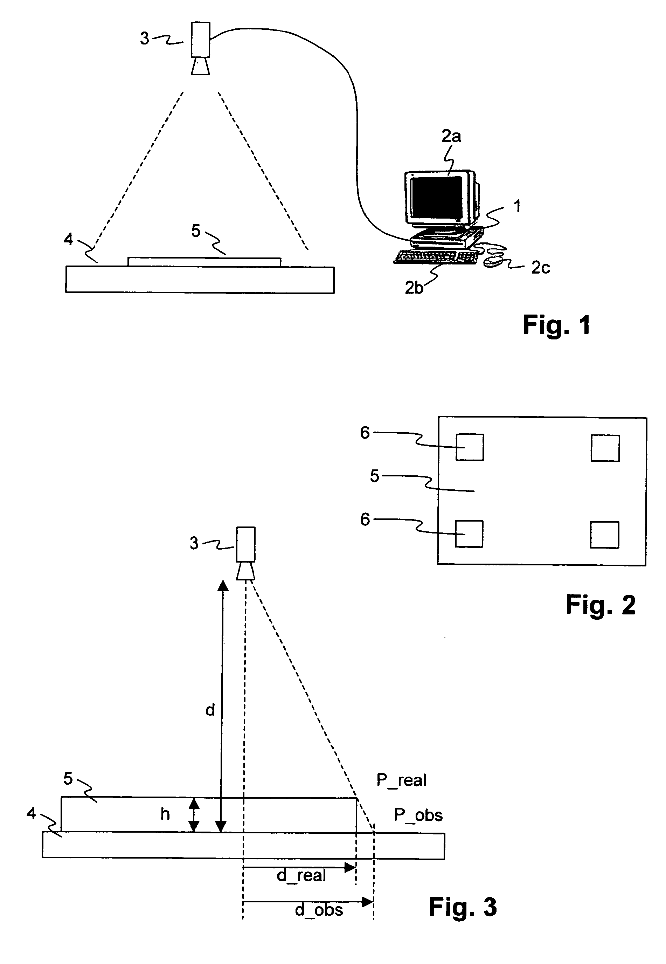

Die **Figur 1** zeigt schematisch den Aufbau einer Messeinrichtung: Eine Datenverabeitungseinheit 1 mit Ein/Ausgabegeräten 2, insbesondere einem Bildschirm 2a, einer Tastatur 2b und einer Maus 2c oder einem anderen Zeigegerät, ist mit einer digitalen Kamera 3 verbunden. Die Kamera 3 kann über eine Kommunikationsverbindung durch die Datenverabeitungseinheit 1 angesteuert werden, insbesondere kann eine Bildaufnahme durch die Datenverabeitungseinheit 1 ausgelöst werden, und kann Bildinformation von der Kamera 3 an die Datenverabeitungseinheit 1 übertragen werden.

Die Kamera 3 ist auf eine Messfläche 4 gerichtet. Auf der Messfläche 4 kann eine Schablone 5 angeordnet werden, so dass die Kamera 3 ein Bild der Schablone 5 mit der Messfläche 4 als Hintergrund aufnehmen kann. Die Messfläche 4 ist vorzugsweise einfarbig, in einer Farbe, die üblicherweise nicht bei Schablonen 5 verwendet wird, beispielsweise grün oder blau. Dadurch wird die Erkennung des Umrisses der Schablone vereinfacht. Die Kamera 3 wird beim Einrichten einmal auf die Messfläche 4 ausgerichtet und kalibriert, und anschliessend nicht mehr bewegt.

**Figur 2** zeigt eine Anordnung von Messflächen 6 zum Ausrichten der Kamera 3. Die Messflächen 6 weisen alle dieselbe Grösse auf und sind regelmässig und mit gleichem Abstand zur Mitte der Messfläche 6 um diese angeordnet. Zum Unterstützen der manuellen Ausrichtung bietet die Datenverabeitungseinheit 1 eine Funktion an, welche die von der Kamera 3 wahrgenommene Fläche der Messflächen 6 für jede Messfläche 6 einzeln bestimmt, beispielsweise als eine Anzahl von Pixeln. Die Kamera wird auf der Flächennormalen auf die Mitte der Messfläche 6 montiert und nach Massgabe dieser wahrgenommenen Flächen orientiert, bis die wahrgenommene Fläche aller Messflächen 6 gleich gross ist.

Zum Kalibrieren der Kamera, d.h. zur Zuordnung von Pixelpositionen zu Positionen auf der Messfläche 4 (in Millimetern) werden vorzugsweise Messmarken in definierten Abständen auf die Messfläche 4 gelegt. Aus den von der Kamera 3 wahrgenommenen Abständen in Pixeln lassen sich entsprechende Umrechnungsfaktoren bestimmen.

Zum Erzeugen einer computerlesbaren Darstellung der Umrisse der Schablone 5 werden die folgenden Schritte ausgeführt:
**Aufnahme eines Bildes:** Sobald eine Schablone 5 auf der Messfläche 4 plaziert ist, wird durch die Datenverabeitungseinheit 1, auf einen entsprechenden Benutzerbefehl hin, eine Aufnahme mittels der Kamera 3 ausgelöst. Das erfasste Rohbild wird über die Kameraschnittstelle ausgelesen, also an die Datenverabeitungseinheit 1 übertragen und gespeichert.
**Transformieren des Bildes:** Das Rohbild weist in der Regel eine Verzerrung auf, welche von der Optik der Kamera 3 abhängt, beispielsweise eine tonnenförmige oder eine kissenförmige Verzeichnung. Die Parameter zur Korrektur solcher Verzerrungen sind teilweise durch den Linsenhersteller zur Verfügung gestellt, oder können experimentell bestimmt werden. Damit wird automatisch eine Korrektur der Verzerrungen durchgeführt und ein entzerrtes Bild erzeugt.

Vorzugsweise wird dabei auch die Kalibrierung respektive die Skalierung des Bildes an die Dicke der Schablone 5 angepasst: **Figur 3** zeigt schematisch die Verhältnisse bei der Korrektur von Messungen nach Massgabe der Schablonendicke, wobei die Dicke der Schablone 5 stark überhöht ist: Ein Punkt P_real auf dem Rand der Schablone 5 mit Dicke h wird durch die Kamera 3 als Punkt P_obs auf der Höhe der Messfläche 4 wahrgenommen. Von der Einrichtung und Kalibrierung der Kamera 3 her ist der Abstand d von der Kamera 3 zur Messfläche 4 bekannt, und ist die horizontale Position d_obs des wahrgenommenen Punktes bestimmbar. Die tatsächliche horizontale Position d_real ergibt sich daraus unter Anwendung elementarer Trigonometrie. Zur Angabe von realen Messwerten, also in Millimetern anstelle von Pixeln, werden jeweils die derart korrigierten Werte verwendet. Diese Korrektur der Kalibrierung wird beispielsweise vor der Segmentierung für das ganze Bild durchgeführt, so dass alle weiteren Masse, also Längen und Winkel, aus dem korrekt skalierten Bild ausgelesen werden können. Die Korrektur kann aber auch später vorgenommen werden, so dass Längen und Positionen als Werte im Pixelraum verarbeitet werden, und nur zur Anzeige an den Benutzer als beispielsweise Millimeter umskaliert werden.

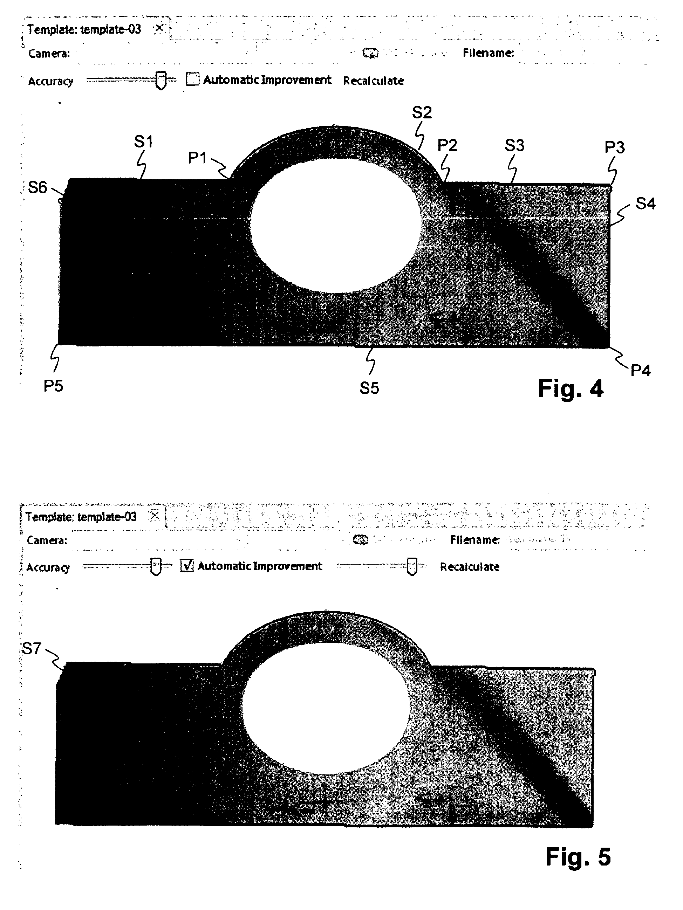

**Figur 4** zeigt beispielhaft ein solches Bild mit der abgebildeten Schablone 5 vor dem Hintergrund 8. Dem Bild der Schablone ist bereits ein segmentierter Umriss überlagert, der beispielsweise wie im Folgenden beschrieben automatisch erzeugt wird. Einzelne Segmente des Umrisses sind jeweils mit S1, S2, S3, etc. bezeichnet, einzelne Übergangspunkte mit P1, P2, P3, etc.

**Umrisserkennung:** Ein Randbereich der Schablone 5 wird in einer ersten Bildanalyse aufgrund von Unterschieden (z.B. Farbton, Helligkeit, Farbsättigung etc.) zwischen Hintergrund 8 und Schablone 5 automatisch erkannt. Wegen der räumlichen Diskretisierung des Digitalbildes in einzelne Pixel wird in der Regel eine Menge von Randpixel ermittelt, welche zum Übergangsbereich gehören, also farblich zwischen der Farbe der Schablone 5 und der Farbe des Hintergrunds 8 liegen. Bei der Segmentierung des Umrisses wird eine Folge von Segmenten bestimmt welche jeweils in Übergangspunkten aneinander anschliessen. Die Segmente sind jeweils von einem elementaren Linientyp. Elementare Linientypen sind insbesondere Geraden, Kreisbögen oder Splines (quadratische oder kubische Splines, oder Splines höheren Grades). Jedes Segment liegt möglichst optimal in einer Menge von Randpixel, beispielsweise indem eine Summe der quadratischen Abweichung der Randpixel vom Segment minimiert wird. Vorzugsweise gleichzeitig werden die Übergangspunkte zwischen den Segmenten bestimmt; so dass also eine kombinierte Optimierung stattfindet. Entsprechende Algorithmen zur Segmentierung sind grundsätzlich bekannt und zum Teil in käuflichen Grafikprogrammen integriert, allerdings ohne integrierte Logik, die der automatischen Erkennung und Vermessung von Schablonen dienlich ist.

In einer bevorzugten Ausführungsform der Erfindung geschieht die Segmentierung in der folgenden Weise:
1. Die Pixel des Originalbildes werden in virtuelle Pixel umgewandelt, welche nicht die ursprüngliche Farbinformation enthalten, sondern für die weitere Bildanalyse und Segmentierung dienliche Informationen. Das Bild wird beispielsweise in ein binäres schwarz/weiss-Bild umgewandelt, indem jedes Pixel, das aufgrund der durchgeführten ersten Bildanalyse zur Messfläche gehört, beispielsweise als weiss (Hintergrund) und alle übrigen Pixel als schwarz (Schablone) betrachtet werden. Zuäusserst liegende Pixel der Schablone oder aber Gitterpunkte zwischen den Pixel auf der schwarz/weiss-Grenze werden als Grenzpunkte, Randpunkte oder Umrisspunkte betrachtet.
2. Die einzelnen Pixel des erzeugten scharz/weiss Bildes werden analysiert und zu logischen Gruppen (Flächen) oder Objekten zusammengefasst. Diese logischen Gruppen sind Ausgangsbasis für die Erkennung von Segmenten, die zusammen jeweils eine geschlossene Figur ergeben. Ein Objekt ist jeweils eine Schablone oder ein Loch in einer Schablone, welches genau eine geschlossene Umrisslinie aufweist. Ein weiterer Optimierungsschritt analysiert die Objekte aufgrund Ihrer Grösse und schliesst kleine Objekte aus, um Störungen im Bild (z.B. Dreck oder Kratzer auf dem Hintergrund) zu eliminieren.
3. Die Segmentierung selbst erfolgt pro Objekt. Zur Segmentierung wird von einem beliebigen Punkt an der schwarz-weiss Grenze ausgegangen, und es wird, der Grenze folgend, ein zweiter Punkt vom Ausgangspunkt weg bewegt und eine Gerade entsprechend den Umrisspunkten zwischen den beiden Punkten bestimmt. Diese Gerade kann eine Ausgleichsgerade (beispielsweise nach der Methode der minimalen Fehlerquadrate) aller Randpunkte zwischen dem ersten und zweiten Punkt sein, oder einfach eine Verbindungsgerade zwischen den beiden Punkten. Die Genauigkeit, bzw. die Varianz, kann mittels eines verschiebbaren Reglers durch den Benutzer eingestellt werden.
4. Es wird nach jedem Schritt, den sich der zweite Punkt weiter weg bewegt, ein Mass für die Abweichung der Randpunkte um die Gerade bestimmt. Beispielsweise ist dieses Mass die Varianz der Punkte um die Ausgleichsgerade. In einer anderen Ausführungsform der Erfindung wird ein Toleranzband um die Gerade gelegt, und die Summe der Umrisspunkte, welche sich ausserhalb (bezüglich der Schablone 5) der Geraden befinden, und der Umrisspunkte, die sich innerhalb der Geraden befinden, als Mass für die Abweichung bestimmt.
5. Übersteigt das Mass für die Abweichung die über den Regler gemäss Schritt 3 vorgegebene Genauigkeit, so wird das Ende der Geraden angenommen und wird der zweite Punkt zu einem Übergangspunkt. Anschliessend wird von diesem Übergangspunkt aus gemäss Schritt 3 weitergefahren.
6. Aufgrund der ermittelten Linien wird in einem zweiten Analyseschritt nach Kreisbögen gesucht. In der bevorzugten Ausführungsform dient die Varianz der Distanz von Randpixeln zum erkannten Liniensegment als Grundlage für die Erkennung von Kreisbögen: Überschreitet die Varianz ein weiteres vorgegebenes Mass, so wird die Menge von Randpunkten durch einen Kreisbogen anstelle einer Geraden angenähert. Die mittels des Reglers eingestellte Genauigkeit ist hierbei von grosser Relevanz, da bei einer Einstellung mit grosser Ungenauigkeit eher Kreissegmente erkannt werden.
7. In einem weiteren Analyseschritt werden zwei aufeinanderfolgende Geraden oder Kreisbögen optimiert. Bei zwei Geraden werden unnötige Zwischensegmente gelöscht, die durch die Mittlung der Varianz der Umrisspunkte an Ecken entstehen. Bei zwei aufeinanderfolgenden Kreisbögen werden diese zusammenführt, wenn dies zur Resultatverbesserung beiträgt (zum Beispiel durch Vergleich beider Radien mit dem Radius des zusammengeführten Kreisbogens, Vergleich der Tangenten an den Schnittpunkten, etc.).
8. Ein nächster Analyseschritt dient zu weiterer logisch-automatischen Verbesserung der Linien ("Automatic Improvement"). Dieser Analyseschritt beinhaltet nochmaliges Erstellen der Liniensegmente auf einer wesentlich genaueren Basis. Durch die Abtrennung von diesem zusätzlichen Schritt von der allgemeinen Erkennung werden gleichzeitig eine automatisierte Groberkennung von Kreisbögen und eine detaillierte Aufteilung von Geraden in mehrere Segmente ermöglicht. Beispielsweise kann eine Gerade automatisch in einzelne Teilabschnitte aufgeteilt werden, deren Richtung sich nur um einen kleinen Winkel unterscheidet. Auch bei der Verbesserung kann die Genauigkeit durch einen Regler eingestellt werden.

Vorzugsweise werden Splines nicht automatisch erkannt, sondern lassen sich nur von Hand in einem späteren Schritt zufügen. Damit wird vermieden, dass jedes unpräzis geschnittene Segment durch ein Spline (anstelle einer Gerade oder eines Kreisbogens) repräsentiert wird.

**Anzeige des segmentierten Umrisses:** Das Ergebnis der Segmentierung, also die Folge von Übergangspunkten und Segmenten, wird dem entzerrten Bild überlagert dem Benutzer dargestellt, wie beispielsweise gemäss der Figur 4. Im Folgenden werden weitere Bearbeitungsmöglichkeiten des Umrisses anhand dieses Umrisses erklärt.

Eine gewünschte Feinheit der Segmentierung, und damit verbunden eine lokale Genauigkeit, ist vorzugsweise als Parameter der Segmentierung fest eingestellt oder durch den Benutzer wählbar. Die Feinheit kann beispielsweise durch eine minimale Segmentlänge in Pixel oder Millimeter spezifiziert werden, oder durch ein anderes Mass. In der **Figur 4** ist ein entsprechender Kontrollschieber zur Eingabe der initial verwendeten Feinheit mit "Accuracy" bezeichnet. Damit wird also festgelegt, ob ein Abschnitt des Umrisses in viele kurze Segmente oder in ein längeres aufgeteilt wird.

**Figur 5** zeigt eine anschliessende Verfeinerung der Segmentierung durch eine Benutzerauswahl einer Option "Automatic Improvement" (Automatische Verbesserung) und eine freie Wahl der Feinheit mittels eines Kontrollschiebers. Die Segmentierung kann für verschiedene Werte der Feinheit wiederholt durchgeführt werden, bis das Ergebnis den Erwartungen entspricht. Es ist damit eine intuitive und sehr einfach zu bedienende Anpassung der Feinheit möglich. Im vorliegenden Beispiel wurde zusätzlich eine abgeschrägte Ecke mit Segment S7 erkannt.

**Modifikation der Segmentierung:** Nun bietet das System dem Benutzer die Möglichkeit zur Modifikation der Segmentierung. Diese umfasst vorzugsweise nur eine eingeschränkte Auswahl von Funktionen, insbesondere keine freie Zeichenfunktion, bei welcher willkürliche Konturen von Hand gezeichnet werden können. Beispielsweise sind die folgenden Modifikationen möglich, wobei jeweils der Ablauf aus Benutzersicht kurz angegeben ist. Dabei werden in der Regel Segmente oder Übergangspunkte durch Anklicken mit einem Zeigegerät wie einer Maus ausgewählt, und es wird eine Aktion über einem Drop-Down Menu oder ein Fenstermenu oder über eine Funktionstaste ausgelöst.
- Umwandeln des Typs eines Segmentes: Anklicken eines Segmentes, Auswahl einer Funktion "Typ ändern" und Angabe des neuen Typs. Das Segment des neuen Typs wird automatisch so gut wie möglich an den Umriss angeglichen. Anschliessend kann das Segment auch manuell modifiziert werden, beispielsweise durch Anklicken eines Kreisbogens und Ändern seines Radius.
- Verschieben eines Übergangspunktes zwischen zwei Segmenten: Anklicken eines Segmentes, Verschieben des Punktes mit der Maus. Die angrenzenden Segmente werden dem verschobenen Punkt angeglichen.
- Zusammenfassen von mehreren Segmenten zu einem Segment: Auswahl der Segmente, Auswahl einer Funktion "Segmente vereinigen". Zwischen diesen Segmenten liegende Übergangspunkte werden gelöscht. Falls die mehreren Segmente alle Geraden sind, werden sie durch eine einzige Gerade ersetzt, sobald ein Kreisbogen dabei ist, wird das zusammengefasste Segment ebenfalls zu einem Kreisbogen.
- Aufteilen eines Segments in zwei oder mehr Segmente: Auswahl des Segmentes, Auswahl einer Funktion "Segment aufteilen". Dabei findet vorzugsweise eine erneute Segmentierung des ausgewählten Segmentes statt, wie oben geschildert, aber mit grösserer Feinheit. Es werden einer oder mehrere Übergangspunkte eingefügt.

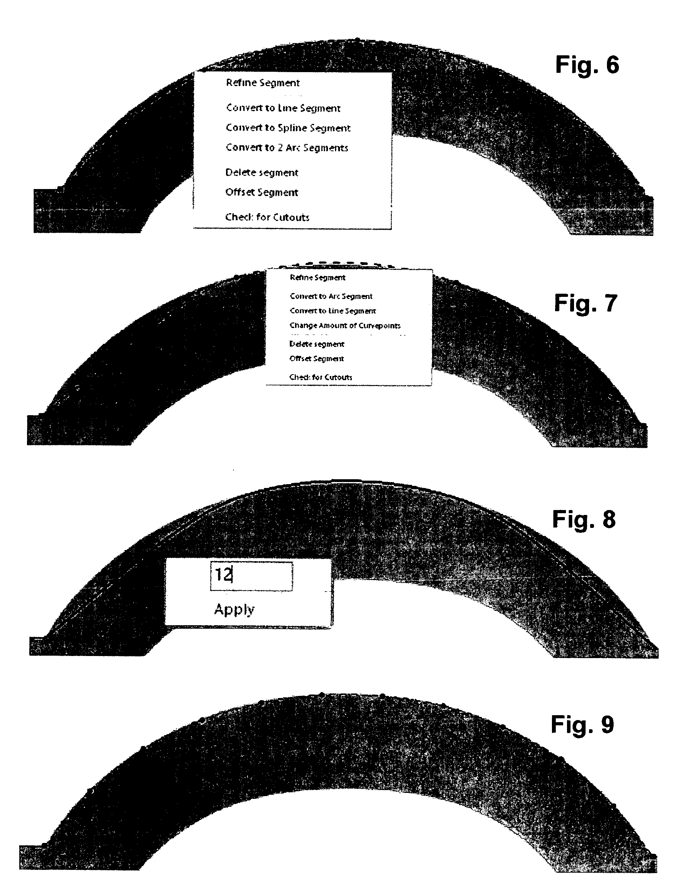

Figuren 6 bis 9 zeigen beispielhaft die Modifikation eines Segmenttyps. In Figur 6 ist der gebogene Abschnitt der Schablone durch die automatische Segmentierung durch einen Kreisbogen angenähert worden. Die Genauigkeit scheint dem Bediener nicht ausreichend zu sein, worauf er den Kreisbogen selektiert und ein kontextuelles Pop-Up Menu aktiviert. Dieses bietet unter anderem die Option "Convert to spline Segment", also die Umwandlung in ein Segment aus Splines. Nach Auswahl dieser Option wird der Abschnitt durch eine Spline-Kurve angenähert, wobei in diesem Fall beispielsweise voreingestellt ist, dass die Spline-Kurve vier Kontrollpunkte (auch "Handles" genannt) aufweist, siehe **Figur 7****.** Die äussersten zwei Kontrollpunkte, durch Vierecke markiert, sind gleichzeitig die Übergangspunkte zu den angrenzenden Segmenten, die übrigen Kontrollpunkte sind durch Kreise markiert.

Um die Annäherung durch die Spline-Kurve zu verfeinern, selektiert der Benutzer diese und aktiviert gemäss **Figur 7** ein kontextuelles Menu der Spline-Kurve. Dieses weist die Option "Change amount of curvepoints", also die Änderung der Anzahl von Kontrollpunkten auf, worauf in einem nachfolgenden Eingabeschritt gemäss **Figur 8** eine Anzahl wie in diesem Fall 12 eingegeben werden kann. Dem entsprechend wird ein Spline mit 12 Kontrollpunkten erstellt und automatisch optimal der Kontur angepasst, siehe **Figur 9****.**

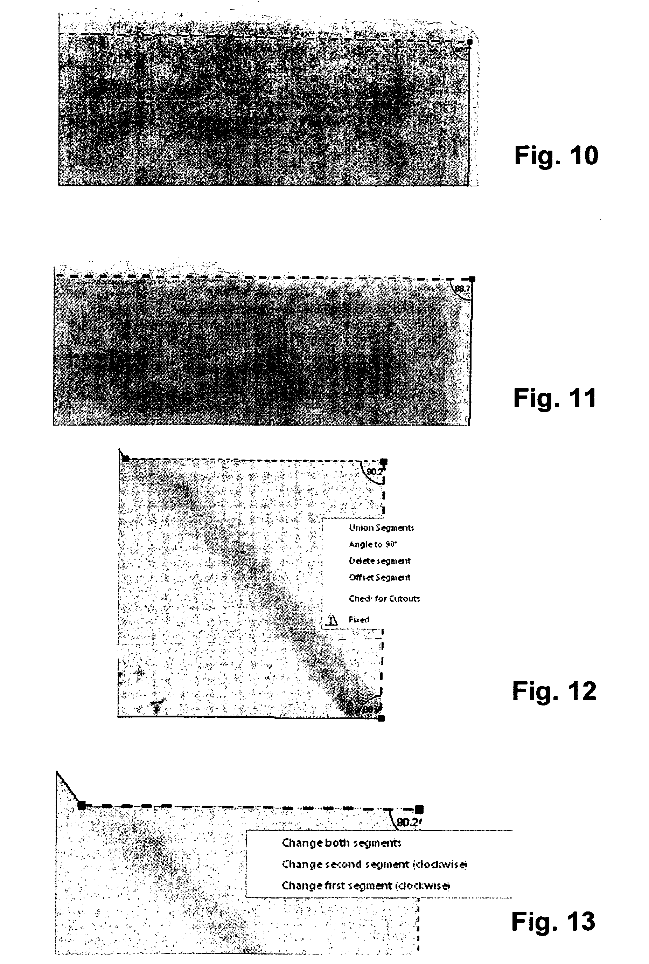

**Figuren 10** und **11** zeigen die manuelle Verschiebung eines Übergangspunktes, indem ein solcher Punkt durch Anklicken selektiert wird **(****Figur 10****)** und an eine andere Stelle gezogen wird **(****Figur 11****).**

**Figuren 12** und **13** zeigen das Erzwingen eines rechten Winkels: Ein Übergangspunkt wird selektiert und ein kontextuelles Menu des Übergangspunktes wird angezeigt. Dieses weist die Option "Angle to 90°", also das Setzen des Winkels auf 90° auf **(****Figur 12****).** Nach dem Auswählen dieser Option wird ein weiteres Auswahlmenu zur Bestimmung der Randbedingungen angezeigt **(****Figur 13****).** Mit diesem wird spezifiziert, ob und welche der beiden Geraden angepasst, d.h. gedreht werden kann (um beispielsweise ihre Mitte oder, vorzugsweise, um das andere Ende), wobei die andere Gerade in der Regel ihre Länge ändert. Üblicherweise wird die kürzere der Geraden gedreht.

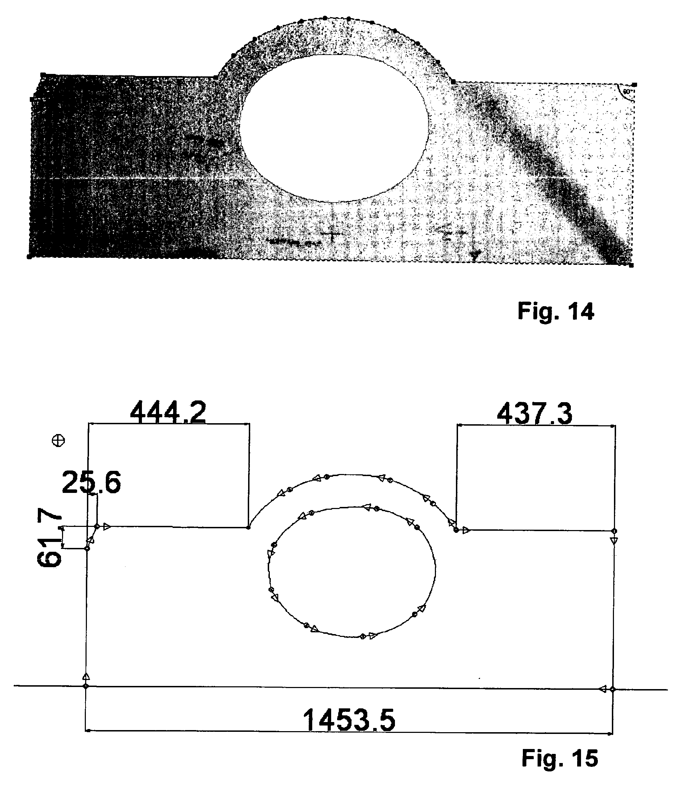

**Figur 14** zeigt die fertig bearbeitete Segmentierung der Schablone aus den vorangehenden Figuren, wobei die Winkel und Übergangs- und Kontrollpunkte angezeigt sind. Die Segmentierung der Innenkontur entlang der Öffnung oder Aussparung in der Schablone geschieht auf analoge Weise wie jene der Aussenkontur. Durch Auswahl einer Programmfunktion "Export" wird eine Datei mit einer CAD-System-kompatiblen Darstellung der Konturen erzeugt und abgespeichert oder einem anderen Programm oder Computersystem übermittelt.

Figur 15 zeigt eine derart exportierte Darstellung eines Umrisses derselben Schablone 5 (mit etwas anderer Segmentierung des runden Teils), wie sie in einem CAD-Programm importiert und dargestellt wurde. Darin ist auch der Umriss des Objektes entsprechend dem ovalen Loch oder Ausschnitt dargestellt.

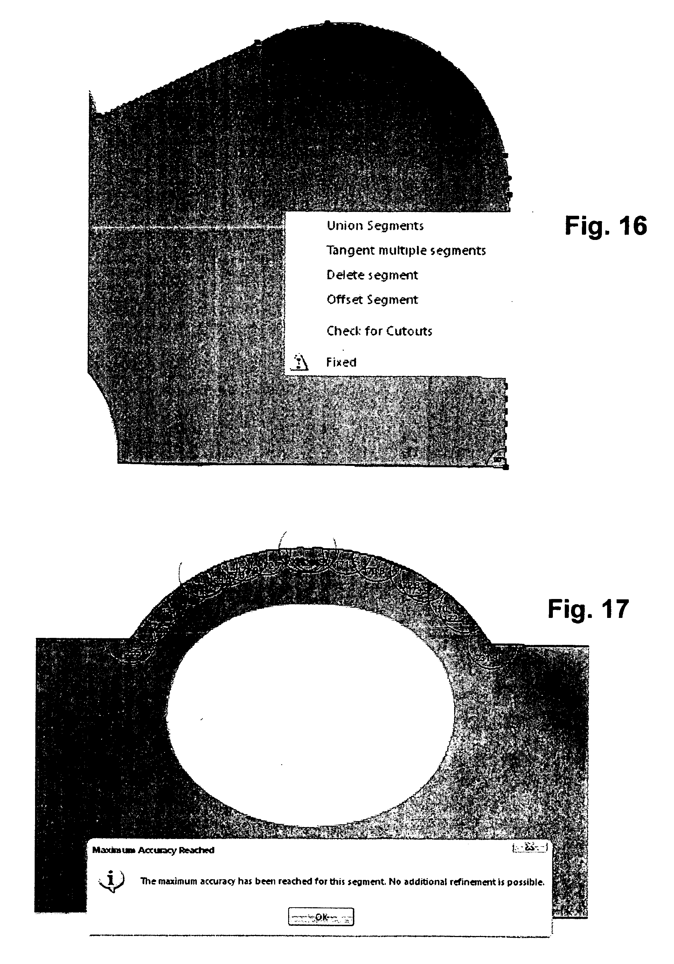

Figuren 16 bis 19 illustrieren beispielhaft weitere Funktionen zur Modifikation der Segmentierung: Figur 16 zeigt das Anpassen von Tangenten, indem aufeinanderfolgende Segmente ausgewählt werden. Ein kontextuelles Menu wird angezeigt, welches unter anderem die Funktion "Tangent multiple Segments" also das Anlegen von Tangenten an mehrere Segmente, anbietet. Ein nachfolgendes Auswahlmenu (nicht gezeigt) erlaubt die Auswahl unter verschiedenen Randbedingungen, beispielsweise "Kreisradius beibehalten", "Gerade ändern", "fixieren von einem oder mehreren Segmenten" etc. "Fixieren" bedeutet, dass die ausgewählten fixierten Segmente nicht verändert werden dürfen, und also die übrigen Segmente an die fixierten angepasst werden müssen.

Figur 17 zeigt das Ergebnis nach der mehrfachen Durchführung einer Funktion "Refine Segment", also "Verfeinere Segment", bis eine maximale Feinheit erreicht ist, das heisst, dass aufgrund der Diskretisierung des Bildes in Pixel keine sinnvolle Segmentierung mit noch kürzeren Segmenten möglich ist.

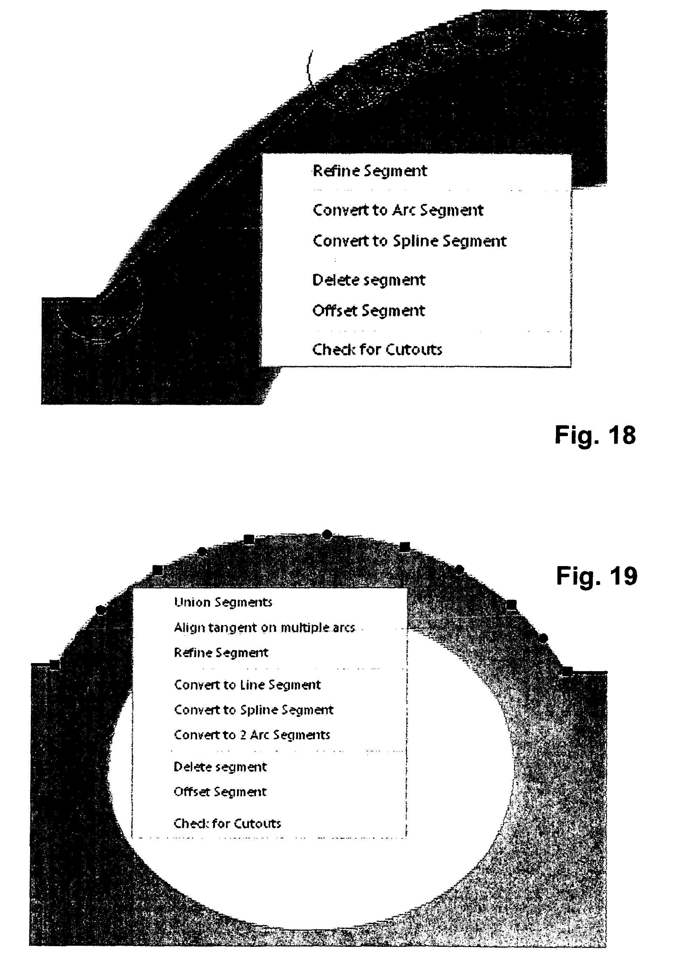

Figur 18 zeigt eine anschliessend an den Zustand gemäss der Figur 17 vorgenommene Vereinigung oder Kombination von Segmenten zu einer Geraden. Dies ist nur zur Illustration, da die Abweichung von der tatsächlichen Kontur hier zu gross ist. Sinnvoller ist stattdessen eine abschnittweise Kombination von Segmenten der Figur 17 zu einer Folge von Splines oder evtl. Kreisbögen gemäss der Figur 19.

Damit diese Splines oder Kreisbögen ohne Knick in einander übergehen, können sie, ebenfalls gemäss der **Figur 19**, durch eine entsprechende Funktion aufeinander abgeglichen werden.

### BEZUGSZEICHENLISTE

- 1: Datenverabeitungseinheit
- 2a, 2b, 2c: Ein/Ausgabegeräte
- 3: Kamera
- 4: Messfläche
- 5: Schablone
- Sn: Segment n
- Pn: Übergangspunkt n

## Patentansprüche

1. Verfahren zum Vermessen einer Schablone (5) und zum Erzeugen einer computerlesbaren Darstellung der Umrisse der Schablone (5), wobei die computerlesbare Darstellung in die Steuerung einer numerisch gesteuerten Bearbeitungsmaschine einlesbar ist, und wobei das Verfahren die folgenden Schritte aufweist, welche durch eine Datenverabeitungseinheit (1) ausgeführt werden:
• Ansteuerung, durch die Datenverabeitungseinheit (1), einer Kamera (3) zum Erfassen eines Bildes einer Messfläche (4) mit der darauf angeordneten Schablone (5);
• Auslesen des erfassten Bildes in die Datenverabeitungseinheit (1);
• Transformieren des erfassten Bildes zur Kompensation von Abbildungsfehlern;
• Automatische Erkennung eines Umrisses der Schablone (5) im Bild und automatische Segmentierung des Umrisses in eine Folge von Einzelsegmenten;
• Anzeige, durch eine grafische Benutzerschnittstelle (2a), des Bildes mit der Schablone (5), überlagert mit einer Darstellung der Segmente;
• Erfassen von Benutzereingaben zur Modifikation der Segmentierung des Umrisses und Anpassen der Segmentierung nach Massgabe dieser Benutzereingaben;
• Berechnen und Ausgeben einer computerlesbaren Darstellung der Segmentierung des Umrisses, welcher korrekt skaliert ist, insbesondere im Format DXF (AutoCad Drawing eXchange Format).

2. Verfahren gemäss Anspruch 1, wobei Segmente von einem der Typen "Gerade", "Kreisbogen" oder "Spline" sind, und wobei Segmente jeweils an Übergangspunkten aneinander anschliessen.

3. Verfahren gemäss Anspruch 2, wobei die Modifikation der Segmentierung des Umrisses mindestens eine der folgenden Gruppe von Modifikationsarten umfasst:
• Umwandeln des Typs eines Segmentes;
• Verschieben eines Übergangspunktes zwischen zwei Segmenten;
• Zusammenfassen von mehreren Segmenten zu einem Segment; und
• Aufteilen eines Segments in zwei oder mehr Segmente.

4. Verfahren gemäss Anspruch 2 oder 3, wobei die Modifikation der Segmentierung ohne den Einsatz von freien Zeichenfunktionen durch den Benutzer ausführbar ist, insbesondere, indem das Verfahren teilweise oder völlig darauf verzichtet, dem Benutzer freie Zeichenfunktionen zur Verfügung zu stellen, indem Übergangspunkte nur automatisch eingefügt und dabei positioniert werden, und durch den Benutzer nur verschoben oder gelöscht werden können.

5. Verfahren gemäss einem der Ansprüche 1 bis 4, wobei die Modifikation der Segmentierung des Umrisses die folgenden Schritte aufweist:
• Erfassen einer Benutzereingabe zum Auswählen eines oder mehrerer Segmente;
• Erfassen einer Benutzereingabe zur Spezifikation einer geometrischen Eigenschaft des oder der ausgewählten Segmente;
• automatisches Anpassen des oder der ausgewählten Segmente an die eingegebene Eigenschaft.

6. Verfahren gemäss einem der Ansprüche 1 bis 5, wobei zur Feinskalierung der Segmente die folgenden Schritte ausgeführt werden:
• Erfassen von Benutzereingaben zur Markierung von zwei Punkten im Bild der Schablone (5);
• Erfassen einer Benutzereingabe zur Spezifikation eines gemessenen Abstandes zwischen den beiden Punkten der Schablone (5);
• Skalieren der Segmentierung des Umrisses nach Massgabe dieses Abstandes.

7. Verfahren gemäss einem der Ansprüche 1 bis 6, welches ferner die folgenden Schritte aufweist
• Erfassen einer Dicke der Schablone (5);
• Berücksichtigen der Dicke bei der Vermassung der Segmentierung, zur Korrektur der von der Kamera (3) wahrgenommenen Lage des Umrisses.

8. Messeinrichtung zum Vermessen einer Schablone (5) und zum Erzeugen einer computerlesbaren Darstellung der Umrisse der Schablone (5), wobei die computerlesbare Darstellung in die Steuerung einer numerisch gesteuerten Bearbeitungsmaschine einlesbar ist, und die Messeinrichtung die folgenden Komponenten aufweist:
• eine Messfläche (4);
• eine Kamera (3), welche zum Erfassen eines digitalisierten Bildes der Messfläche (4) angeordnet ist und durch eine Datenverabeitungseinheit (1) ansteuerbar ist;
• eine Datenverabeitungseinheit (1) mit Ein/Ausgabegeräten (2a, 2b, 2c) und einer Schnittstelle zum Einlesen von digitalisierten Bildern der Kamera (3);
wobei die Datenverabeitungseinheit (1) programmiert ist, die Schritte des Verfahrens gemäss einem der Ansprüche 1 bis 7 durchzuführen.

9. Computerprogramm zum Vermessen einer Schablone (5) und zum Erzeugen einer computerlesbaren Darstellung der Umrisse der Schablone (5), welches auf einer Datenverarbeitungseinheit einer Messeinrichtung gemäss Anspruch 8 ladbar und ausführbar ist, und welches bei der Ausführung das Verfahren nach einem der Ansprüche 1 bis 7 ausführt.

10. Datenträger, enthaltend ein Computerprogramm gemäss Anspruch 9.
